# EUROPEAN PATENT APPLICATION

(11) **EP 2 657 834 A1**
(43) Date of publication of application: **30.10.2013**
(21) Application number: 10860944.7
(22) Date of filing: 24.12.2010
(51) Int. Cl.: G06F 7/535

(54) **DIVIDER CIRCUIT AND MEMORY CONTROLLER**

(71) Applicant: Fujitsu Limited, Kawasaki-shi, Kanagawa 211-8588 (JP)
(72) Inventor: OSANO, Hidekazu, Kawasaki-shi, Kanagawa 211-8588 (JP); SAKAMAKI, Hideyuki, Kawasaki-shi, Kanagawa 211-8588 (JP); NAKAYAMA, Hiroshi, Kawasaki-shi, Kanagawa 211-8588 (JP); TAKAKU, Kazuya, Kawasaki-shi, Kanagawa 211-8588 (JP); HIGETA, Masanori, Kawasaki-shi, Kanagawa 211-8588 (JP)
(74) Representative: HOFFMANN EITLE
(86) International application number: PCT/JP2010/073408
(87) International publication number: WO 2012/086073

(57) **Abstract**

A separation circuit separates a 32-bit dividend, for example 1695, into 4-bit segments starting from the lowest bit and outputs 9 separated dividends (X0 to X8). The position of each separated dividend counted from a separated dividend having the lowest bit is called i (i=0 to 8). A first output circuit concatenates a separated dividend and 0s the number of which is equal to integer multiple of 4 bits with the 0s at the end of the separated dividend. Each calculation circuit outputs an 8-bit quotient that is obtained by dividing by 3(=2ⁿ-1 and n=2) a numerical value created by the first output circuit. Each calculation circuit outputs from a second output circuit a first bit sequence that is the upper 4 bits of the 8-bit quotient, and a second bit sequence in which i sets of lower 4 bits of the 8-bit quotient are arranged. A quotient addition circuit outputs, as a quotient of 1695 divided by 3, the sum of values in each of which the first bit sequence is set at upper bits and the second bit sequence is set at lower bits.

## Description

### TECHNICAL FIELD

Embodiments relate to a division circuit and a memory controller that divide a dividend by a specific divisor.

### BACKGROUND ART

When a divisor is 2ⁿ (n is an integer and n≥1) and a dividend is expressed with a binary number in division performed by a digital circuit, lower n bits are a remainder and the other bits are a quotient. When a divisor is 2ⁿ (n is an integer and n≥1), division is performed in a short time but this method is not applied to division with a divisor being a number other than 2ⁿ.

For division with a divisor being a number other than 2ⁿ, a non-restoring method (the first related art) or a restoring method (the second related art) is known. According to a first related art, a divisor is subtracted multiple times from upper digits of a dividend and if the remainder is negative, the divisor is added at lower digits. A second related art is performed like calculation by hand in which a divisor is subtracted from upper digits of a dividend; if the divisor is subtracted, 1 is set in a quotient; if the divisor cannot be subtracted, 0 is set in a quotient; and the calculation goes to the next digit. In this way, a quotient and a remainder are obtained.

Whether the first or the second related art is adopted, at least bits equal to (bits of dividend)-(bits of divisor) are shifted to perform division. If a divisor is a fixed integer in the first and the second related arts, more bits are shifted, clocks for shift operations increase, and the time required for calculation increases as the difference of bits between dividend and divisor widens.

As a method for reducing the shift operations, a technique (third related art) to reduce a calculation time is known (see, for example, Patent Document 1). According to the third related art, a dividend is divided into multiple segments to reduce the shift operations. According to the third related art, a segment is selected one by one and the segment is divided by a given divisor. A quotient and a remainder are stored in a quotient register and a remainder register, respectively. In the first and the second related arts, clocks of the bit width of a dividend is required for division but in the third related art, only clocks equal to the number of segments are needed.

Patent Document 1: Japanese Laid-Open Patent Publication No. H1-166129

### DISCLOSURE OF INVENTION

### PROBLEM TO BE SOLVED BY THE INVENTION

However, the third related art has deficiencies in that clocks increases according to the number of segments and thus when a dividend is large, the number of segments and clocks increase. If the number of segments is reduced to prevent the increase of clocks in the third related art, the bit width of each segment increases and the quotient register and the remainder register increases, increasing the circuit size.

An object of the present invention is to solve the above problems and to provide a division circuit according to which the circuit size does not increase and the division of binary numbers with a divisor of 2ⁿ-1 (n is an integer and n≥2) is performed at a faster speed.

### MEANS FOR SOLVING PROBLEM

According to one aspect of the invention, a division circuit includes a separation circuit configured to separate a dividend into k-bit segments starting from a lowest bit of the dividend where k is integer multiple of n, and output h/k separated dividends, wherein the dividend is h-bit long that is longer than a specific divisor of 2ⁿ-1 where n is an integer and n≥2; a first output circuit configured to output, for each separated dividend, a 2k-bit quotient that is obtained by dividing by the specific divisor a separated dividend with 0s added where the number of 0s is equal to integer multiple of k; a second output circuit configured to output, for each separated dividend, a first bit sequence that includes an upper k-bit sequence of the 2k-bit quotient, and a second bit sequence that includes i sets of lower k bits of the 2k-bit quotient, wherein a position of each separated dividend counted from a separated dividend having the lowest bit is called i where i=0 to h/k-1; and a quotient addition circuit configured to add composite sequences in each of which the first bit sequence is placed at upper bits and the second bit sequence is placed at lower bits.

### EFFECT OF THE INVENTION

According to a division circuit and a memory controller of the present embodiments, the calculation speed of binary division using a divisor of 2ⁿ-1 (n is an integer and n≥2) is increased without increases in circuit size.

### BRIEF DESCRIPTION OF DRAWINGS

FIG. 1 is a diagram depicting one example of a division circuit;
FIG. 2 is a diagram depicting examples of a calculation circuit 110 and a calculation circuit 115;
FIG. 3 is a diagram depicting an example of a conversion table of a first output circuit;

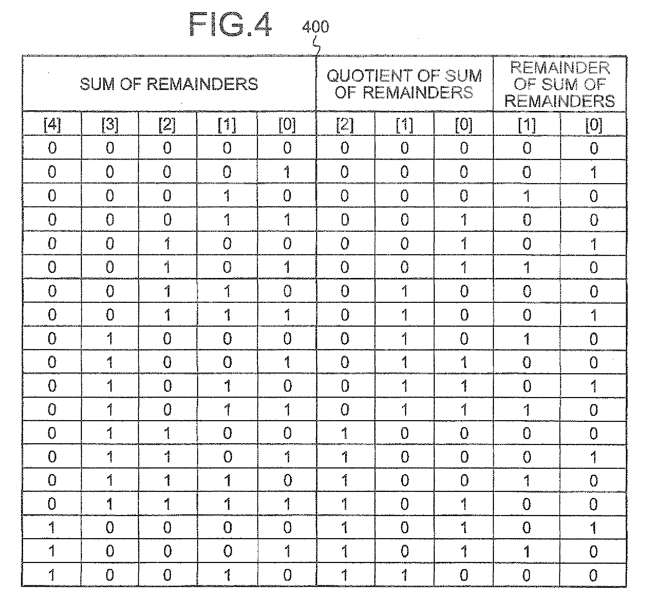

FIG. 4 is a diagram depicting an example of a conversion table concerning a remainder division circuit 104;
FIG. 5 is a diagram depicting Example 1;
FIG. 6 is a diagram depicting Example 2;
FIG. 7 is a diagram depicting one example of a memory access time in a memory controller; and
FIG. 8 is a diagram depicting one example of 3-channel interleaving in the memory controller.

### BEST MODE(S) FOR CARRYING OUT THE INVENTION

Preferred embodiments of a division circuit and a memory controller will be explained. The division circuit receives an h-bit dividend, divides the h-bit dividend by a divisor of 2ⁿ-1, and outputs a quotient and a remainder of the division. An example is explained below where h=34 (bits), X (dividend) is a value of 34 bits, n=2, and Y (divisor) is 3.

### (Embodiments)

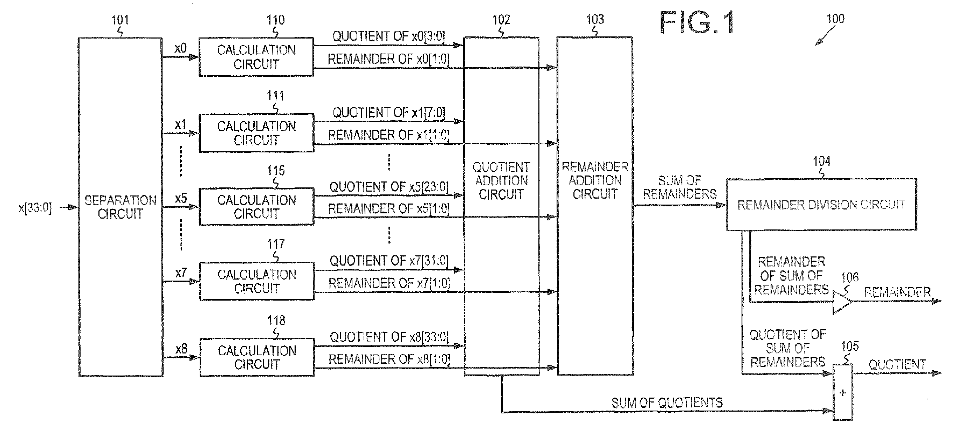

FIG. 1 is a diagram depicting one example of the division circuit. A division circuit 100 includes a dividend separation circuit 101, calculation circuits 110 to 118, a quotient addition circuit 102, a remainder addition circuit 103, a remainder division circuit 104, a carried value addition circuit 105, and a buffer 106.

The dividend separation circuit 101 separates a dividend of X[33:0] into segments of k (integer multiple of n) bits starting from the lowest bit. X of 34 bits is separated into 4-bit segments starting from the lowest bit of X. 9 (= rounding up h/k) separated dividends is output. m=8.

For example, m+1 separated dividends are given names of X0, X1, ..., x(m-1), and Xm from the lowest one. X[3:0] becomes X0[3:0], X[7:4] becomes X1[3:0], X[11:8] becomes X2[3:0], X[15:12] becomes X3[3:0], X[19:16] becomes X4[3:0], X[23:20] becomes X5[3:0], X[27:24] becomes X6[3:0], X[31:28] becomes X7[3:0], and X[33:32] becomes X8[1:0].

The calculation circuits 110 to 118 respectively include a first output circuit and a second output circuit. The position of each separated dividend counted from a separated dividend having the lowest bit is called i (i=0 to 8). The calculation circuit 110 and the calculation circuit 115 concerning X0 and X5 are taken as an example.

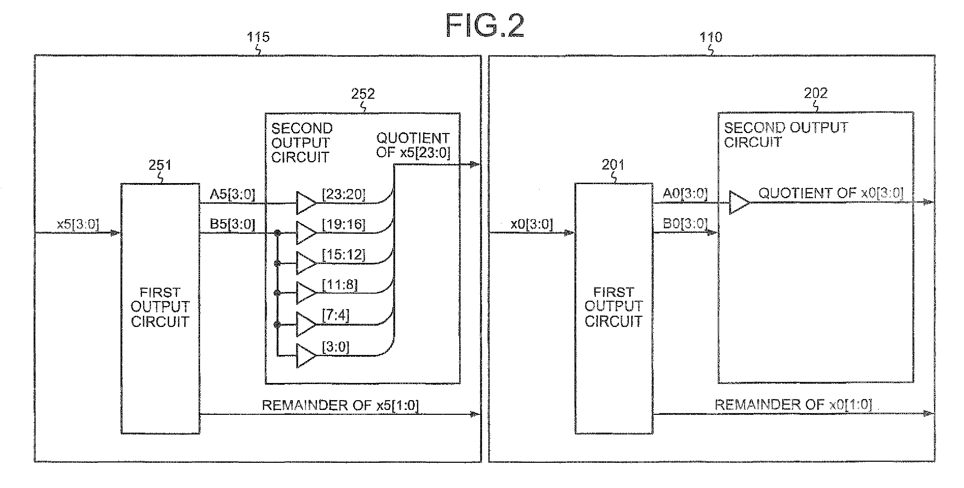

FIG. 2 is a diagram depicting examples of the calculation circuit 110 and the calculation circuit 115. The calculation circuit 110 includes a first output circuit 201 and a second output circuit 202. The calculation circuit 115 includes a first output circuit 251 and a second output circuit 252.

Dividing X0[3:0] output from the separation circuit 101 by 3, the first output circuit 201 outputs a quotient of 8 bits (4 bits of A0 and 4 bits of B0) and a remainder of 2 bits.

Adding 20 bits of 0 at the end of X5[3:0] output from the separation circuit 101 and dividing X5[3:0] with 20 bits of 0 at the end by 3, the first output circuit 251 outputs a quotient of 8 bits (4 bits of A5 and 4 bits of B5) and a remainder of 2 bits.

In this embodiment, the first output circuit 201 and the first output circuit 251 have a conversion table that stores 16 possible results of the calculation where a number expressed by 8 bits with lower 4 bits being 0 is divided by 3. The conversion table is implemented with, for example, a logical device. In the description below, a binary number of two digits is expressed by 2'b and a specific number following 2'b. For example, 5 is expressed as 3'b101.

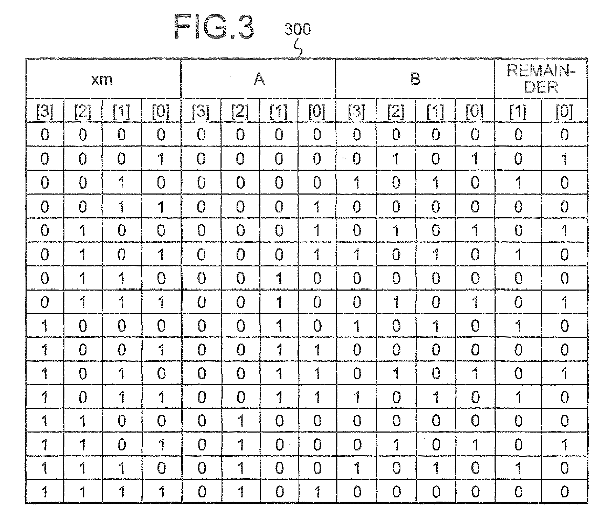

FIG. 3 is a diagram depicting an example of a conversion table of the first output circuit. According to a conversion table 300, A, B, and a remainder are output in response to the input of Xm. For example, when Xm is 4'b0000, A which is the upper 4 bits of a 8-bint quotient is 4'b0000, B which is the lower 4 bits of the 8-bit quotient is 4'b0000, and a remainder is 2'b00. When Xm is 4'b0111, A is 4'b0010, B is 4'b0101, and a remainder is 2'b01.

The 4-bit separated dividend takes one of 0 (4'b0000) to 15 (4'b1111). When a separated dividend is divided by 3 (specific divisor), a remainder takes one of 0 (2'b00) to 2 (2'b10).

The reference of description returns to FIG. 2. The second output circuit 202 outputs the upper 4 bits (A0) of the 8-bit quotient (4-bit A0 and 4-bit B0) coming from the first output circuit 201 and also outputs a 2k-bit quotient (without the lower 4 bits (B0) concatenated). In the case of X0, i=0 and thus the second output circuit 202 outputs A0 via the buffer as a quotient of X0 but does not output B0.

The second output circuit 252 outputs the upper 4 bits (A5) of the 8-bit quotient (4-bit A5 and 4-bit B5) coming from the first output circuit 251 and also outputs a bit sequence where five sets of lowest 4 bits of the 2k-bit quotient are arranged.

When a divisor is 2ⁿ-1, among a k(z+1)-bit quotient obtained by dividing a k-bit separated dividend with 0s added where the number of 0s is equal to integer multiple (z) of k bits, the lower kz bits of the k(z+1)-bit quotient includes the same value repeated for every k bits.

For example, when a value where 20 (5 times k=4) bits of 0s are concatenated to 4'b1010 is divided by 3, the result is 24'b001101010101010101010101. The upper 4 bits are 4'b0011. In the lower 20 bits, 4'b0101 is repeated 5 times for every 4 bits.

For example, when a value where 24 (3 times k=8) bits of 0s are concatenated to 8'b10101101 is divided by 3, a 32-bint quotient is 32'b11100110101010101010101010101010. The upper 8 bits are 8'b11100110. In the lower 24 bits, 8'b10101010 is repeated 3 times for every 8 bits.

The reference of description returns to FIG. 1. The quotient addition circuit 102 calculates the sum of numerical values each having a first bit sequence output from the second output circuit at upper bits and a second bit sequence output from the second output circuit at lower bits.

The remainder addition circuit 103 adds all remainders output from the first output circuit for each separated dividend. The remainder division circuit 104 divides the sum output from the remainder addition circuit 103 by the specific divisor and outputs a quotient because there is a case where the sum of remainders exceeds the specific divisor. Further, the remainder division circuit 104 outputs, via the buffer 106, a remainder of the sum of remainders, as a remainder of the division of the dividend by the specific divisor.

When the specific divisor is 3(2'b11), the remainder is at most 2(2'b10). Therefore, the sum of remainders is at most 18(5'b10010) even when all remainders output from the first output circuit for each separated dividend take the same value of 2(2'b10) . The remainder division circuit 104 has beforehand a conversion table that stores quotients (called quotients of the sum of remainders) obtained by dividing the sum of remainders (0(5'b00000) to 18(5'b10010)) by 3 (specific divisor) and also stores remainders (called remainders of the sum of remainders). The conversion table is, for example, implemented with a logical device.

FIG, 4 is a diagram depicting an example of a conversion table concerning the remainder division circuit 104. According to a conversion table 400, a quotient of the sum of remainders and a remainder of the sum of remainders are output in response to the sum of remainders. As explained above, the sum of remainders takes one of the values 0 (5'b00000) to 18(5'b10010). The quotient of the sum of remainders is a quotient obtained by dividing the sum of remainders by 3 and is a value carried to the lowest bit of the sum calculated by the quotient addition circuit.

The remainder of the sum of remainders is a remainder obtained by dividing the sum of remainders by 3 and is output as a remainder of division where the dividend is divided by the specific divisor. Remainders of 0(5'b00000) to 18(5'b10010) divided by 3 are 0(2'b00) to 2(2'b10). For example, when the sum of remainders is 5'b00011, the quotient of the sum of remainders is 3'b001 and the remainder of the sum of remainders is 2'b00.

The reference of description returns to FIG. 1. The carried value addition circuit 105 adds the sum of quotients output from the quotient addition circuit and the quotient of the sum of remainders. The carried value addition circuit 105 outputs the result as a quotient of division where the dividend is divided by the specific divisor.

As an example, with a particular 34-bit dividend, the calculation is explained.
Example 1: X/Y = 1695(34'b0000000000000000000000011010011111)/3(2'b11)
Example 2 : X/Y = 177147(34'b0000000000000000101011001111111011)/3(2'b11)

### (Example 1)

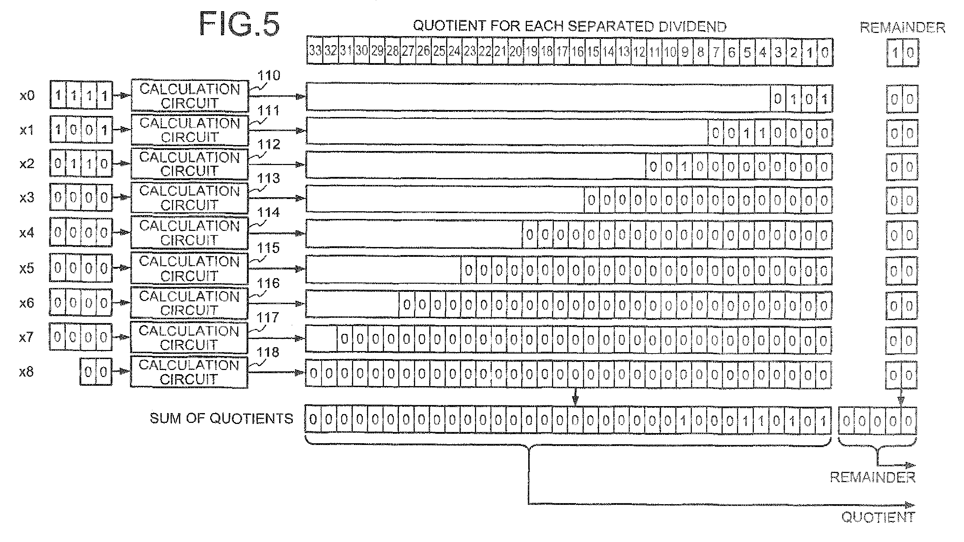

FIG. 5 is a diagram depicting Example 1. The dividend separation circuit 101 separates
34'b0000000000000000000000011010011111 into 4-bit segments starting from the lowest bit:
X0=4'b1111;
X1=4'b1001;
X2=4'b0110;
X3=4'b0000;
X4=4'b0000;
X5=4'b0000;
X6=4'b0000;
X7=4'b0000;
X8=2'b00.

4'b1111 (X0) is given to the calculation circuit 110. The calculation circuit 110 outputs a bit sequence of 4'b0101 and also outputs 2'b00 as a remainder. 4'b1001 (X1) is given to the calculation circuit 111. The calculation circuit 111 outputs a bit sequence of 8'b00110000 and also outputs 2'b00 as a remainder.

4'b0110 (X2) is given to the calculation circuit 112. The calculation circuit 112 outputs a bit sequence of 12'b001000000000 and also outputs 2'b00 as a remainder. 4'b0000 (X3) is given to the calculation circuit 113. The calculation circuit 113 outputs a bit sequence of 16'b0000000000000000 and also outputs 2'b00 as a remainder.

4'b0000 (X4) is given to the calculation circuit 114. The calculation circuit 114 outputs a bit sequence of 20'b00000000000000000000 and also outputs 2'b00 as a remainder. 4'b0000 (X5) is given to the calculation circuit 115. The calculation circuit 115 outputs a bit sequence of 24'b000000000000000000000000 and also outputs 2'b00 as a remainder.

4'b0000 (X6) is given to the calculation circuit 116. The calculation circuit 116 outputs a bit sequence of 28'b0000000000000000000000000000 and also outputs 2'b00 as a remainder. 4'b0000 (X7) is given to the calculation circuit 117. The calculation circuit 117 outputs a bit sequence of 32'b00000000000000000000000000000000 and also outputs 2'b00 as a remainder.

2'b00 (X8) is given to the calculation circuit 118. The calculation circuit 118 outputs a bit sequence of 34'b0000000000000000000000000000000000 and also outputs 2'b00 as a remainder.

The quotient addition circuit 102 adds all bit sequences output from the calculation circuit for each separated dividend. The result is 34'b0000000000000000000000001000110101. There is no remainder since all remainders output from the calculation circuit for each separated dividend are 0 (zero). Thus, nothing is carried from the remainder and the quotient of 1695/3 is 565 (34'b0000000000000000000000001000110101). When only a dividend that yields no remainder when divided by a divisor of 2ⁿ-1 is considered, the remainder addition circuit 103, the remainder division circuit 104, and the carried value addition circuit 105 may be omitted.

### (Example 2)

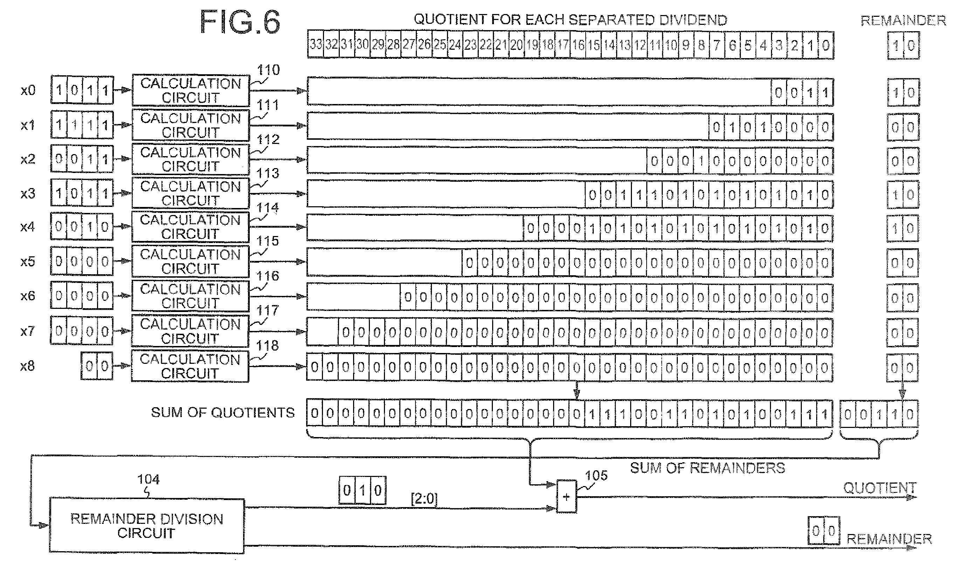

FIG. 6 is a diagram depicting Example 2. The dividend separation circuit 101 separates
34'b0000000000000000101011001111111011 into 4-bit segments starting from the lowest bit:
X0=4'b1011;
X1=4'b1111;
X2=4'b0011;
X3=4'b1011;
X4=4'b0010;
X5=4'b0000;
X6=4'b0000;
X7=4'b0000;
X8=2'b00.

4'b1011 (X0) is given to the calculation circuit 110. The calculation circuit 110 outputs a bit sequence of 4'b0011 and also outputs 2'b10 as a remainder. 4'b1111 (X1) is given to the calculation circuit 111. The calculation circuit 111 outputs a bit sequence of 8'b01010000 and also outputs 2'b00 as a remainder. 4'b0011 (X2) is given to the calculation circuit 112. The calculation circuit 112 outputs a bit sequence of 12'b000100000000 and also outputs 2'b00 as a remainder.

4'b1011 (X3) is given to the calculation circuit 113. The calculation circuit 113 outputs a bit sequence of 16'b0011101010101010 and also outputs 2'b10 as a remainder. 4'b0010 (X4) is given to the calculation circuit 114. The calculation circuit 114 outputs a bit sequence of 20'b00001010101010101010 and also outputs 2'b10 as a remainder.

4'b0000 (X5) is given to the calculation circuit 115. The calculation circuit 115 outputs a bit sequence of 24'b000000000000000000000000 and also outputs 2'b00 as a remainder. 4'b0000 (X6) is given to the calculation circuit 116. The calculation circuit 116 outputs a bit sequence of 28'b0000000000000000000000000000 and also outputs 2'b00 as a remainder.

4'b0000 (X7) is given to the calculation circuit 117. The calculation circuit 117 outputs a bit sequence of 32'b00000000000000000000000000000000 and also outputs 2'b00 as a remainder. 4'b0000 (X8) is given to the calculation circuit 118. The calculation circuit 118 outputs a bit sequence of 34'b0000000000000000000000000000000000 and also outputs 2'b00 as a remainder. The calculation circuit 118 may output 36 bits of 0s.

The quotient addition circuit 102 adds all bit sequences output from the calculation circuits for each separated dividend. The result is 34'b0000000000000000001110011010100111.

The remainder addition circuit 103 adds all remainders output from the calculation circuits for each separated dividend. The sum of remainders is 5'b00110.

As the sum of remainders is 5'b00110, the remainder division circuit 104 outputs 3'b010 as a quotient of the sum of remainders based on the conversion table 400 and also outputs 2'b00 as a remainder of the sum of remainders.

The carried value addition circuit 105 adds the quotient of the sum of remainders output from the remainder division circuit 104 to the result output from the quotient addition circuit 102. Namely, the carried value addition circuit 105 adds 3'b010 to 34'b0000000000000000001110011010100111. The result (quotient of the division of 177147 by 3) of the carried value addition circuit 105 is 59049 (34'b0000000000000000001110011010101001).

An example of operation of the division circuit 100 is explained. The division circuit 100 provides fast division when a divisor is 2ⁿ-1. For example, the memory controller LSI (Large Scale Integration) that connects dual inline memory modules (DIMM is considered. When the number of channels of the DIMM is 3 (n=2, 2ⁿ-1=3), the conventional technique cannot switch channels quickly for memory interleaving over three channels. The memory interleaving is a technique to speed up the access to memory by accessing multiple blocks of memory simultaneously and in parallel.

On the other hand, according to the embodiments, the calculation is done at a fastest speed of one clock when a divisor is 3, thereby switching channels swiftly.

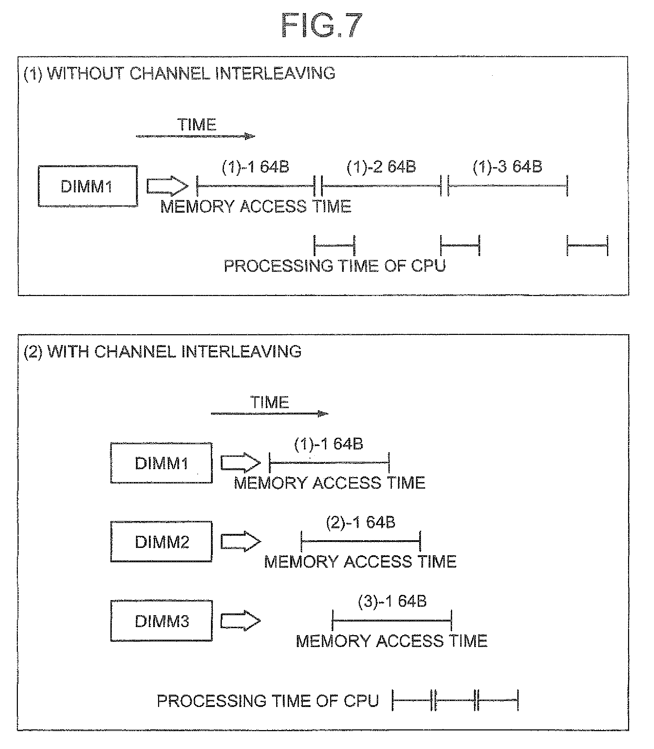

FIG. 7 is a diagram depicting one example of a memory access time in a memory controller. For clarity, FIG. 7 depicts cases without channel interleaving and with channel interleaving. (1) Without channel interleaving, the memory access takes more time than the processing time of the CPU and thus the entire processing time is approximately equal to the sum of the memory access time. On the other hand, (2) with channel interleaving, the entire processing time reduces compared with the case of (1) without channel interleaving since the memory access is performed in parallel.

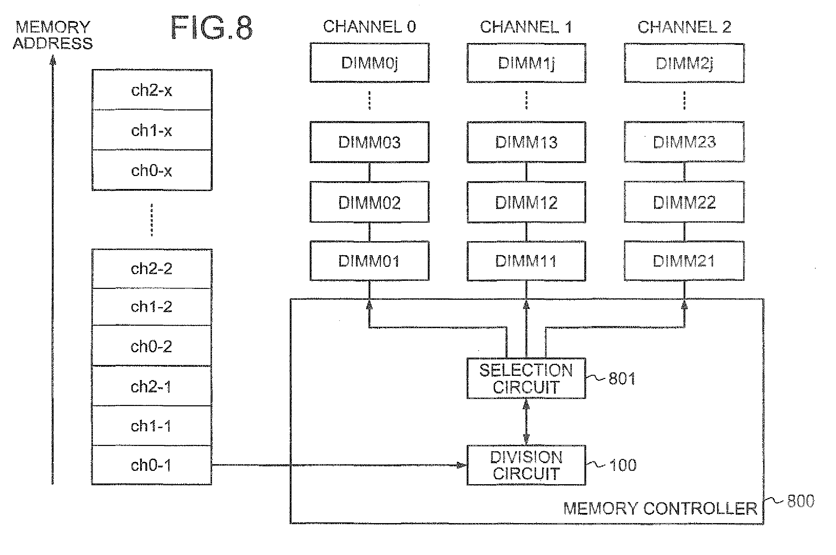

FIG. 8 is a diagram depicting one example of the 3-channel interleaving in the memory controller. In FIG. 8, DIMMs are separated into channels 0 to 2. Channel 0 includes DIMM01 to DIMM0j (j≥1), channel 1 includes DIMM11 to DIMM1j, and channel 2 includes DIMM21 to DIMM2j.

A memory controller 800 controls, based on a memory address, access to the channels and the DIMMs. The memory controller 800 includes the division circuit 100 and a selection circuit 801. For the division circuit 100, a divisor is 3 (= the number of channels). The memory controller 800 forwards a selected memory address to the division circuit 100 as a dividend. The division circuit 100 divides the memory address by 3 and outputs a quotient and a remainder to the selection circuit 801. An output from the remainder division circuit of the division circuit 100 is the remainder of the division of the memory address by 3. An output from the carried value addition circuit 105 of the division circuit 100 is the quotient of the division of the memory address by 3.

The selection circuit 801 selects a channel based on the remainder output from the division circuit 100. The selection circuit 801 also selects a DIMM within the selected channel based on the quotient output from the division circuit 100. For example, when the remainder of the division of the designated memory address by 3 is 0, the selection circuit 801 selects channel 0. The selection circuit 801 selects channel 2 when the quotient of the division of the designated memory address by 3 is 2. The memory controller 800 selects a memory address one after another and switches channels so that DIMMs are selected in parallel.

As set forth above, the division circuit separates a dividend into k-bit segments. 0s the number of which is equal to integer multiple of k bits are added at the end of each separated dividend and a value obtained by the process is divided by a divisor of 2ⁿ-1. Results of the division for each separated dividend are added. A result of the addition is a quotient of the division of the dividend by the divisor. Division can be performed in parallel based on the characteristic property: when the k-bit separated dividend with integer multiple of k bits of 0s concatenated is divided by the specific divisor, the same value repeatedly appears for every k bits in lower integer multiple of k bits of the quotient. Further, since the identical division is performed in parallel, the size of a circuit can be reduced. Division with 2ⁿ-1 being a divisor can be performed at the fastest speed of within one clock and thus the division process speeds up. Furthermore, registers for a quotient becomes unnecessary and the calculation is implemented only with combinational circuits and thus the size of a division circuit can be reduced.

2^{k} values of 2k-bit quotients of the division where the separated dividend with integer multiple of k bits of 0s concatenated at the end is divided by the divisor of 2ⁿ-1 are stored. A 2k-bit quotient is output in response to a separated dividend. Thus, the size of a division circuit is reduced.

The separated dividend with integer multiple of k bits of 0s concatenated is divided by the divisor of 2ⁿ-1 to yield remainders for each separated dividend. All remainders are added. When the sum of remainders exceeds the divisor, the sum of remainders is further divided by 2ⁿ-1. In this way, a quotient and a remainder of the division of the dividend by the divisor are calculated. As a result, the calculation of the quotient and the remainder in the division with 2ⁿ-1 being a divisor can be performed at the fastest speed of within one clock and speeds up. Further, registers for quotients and remainders become unnecessary and thus the calculation can be implemented only with combinational circuits.

2^{k} values of 2k-bit quotients and remainders of the division where the separated dividend with integer multiple of k bits of 0s concatenated at the end is divided by a divisor are stored. A 2k-bit quotient and remainder is output in response to a separated dividend.

When access is made to memory modules that are separated into 2ⁿ-1 channels, a channel is selected based on a remainder of the division of a memory address by 2ⁿ-1 and a memory module in the selected channel is selected based on a quotient of the division of a dividend by 2ⁿ-1. with a calculation circuit that can process the division at the fastest speed of within one clock, the memory access can speed up.

### EXPLANATIONS OF LETTERS OR NUMERALS

- 100: division circuit
- 101: separation circuit
- 102: quotient addition circuit
- 103: remainder addition circuit
- 104: remainder division circuit
- 105: carried value addition circuit
- 110 to 118: calculation circuits
- 201,251: first output circuit
- 202,252: second output circuit
- 800: memory controller
- 801: selection circuit

## Claims

1. A division circuit comprising:
a separation circuit configured to separate a dividend into k-bit segments starting from a lowest bit of the dividend where k is integer multiple of n, and output h/k separated dividends, wherein the dividend is h-bit long that is longer than a specific divisor of 2ⁿ-1 where n is an integer and n>2;
a first output circuit configured to output, for each separated dividend, a 2k-bit quotient that is obtained by dividing by the specific divisor a separated dividend with 0s added where the number of 0s is equal to integer multiple of k;
a second output circuit configured to output, for each separated dividend, a first bit sequence that includes an upper k-bit sequence of the 2k-bit quotient, and a second bit sequence that includes i sets of lower k bits of the 2k-bit quotient, wherein a position of each separated dividend counted from a separated dividend having the lowest bit is called i where i=0 to h/k-1; and
a quotient addition circuit configured to add composite sequences in each of which the first bit sequence is placed at upper bits and the second bit sequence is placed at lower bits.

2. The division circuit according to claim 1,
wherein the first output circuit stores 2^{k} values of the 2k-bit quotient corresponding to values of the separated dividends and output the 2k-bit quotient in response to the separated dividend.

3. A division circuit comprising:
a separation circuit configured to separate a dividend into k-bit segments starting from a lowest bit of the dividend where k is integer multiple of n, and output h/k separated dividends, wherein the dividend is h-bit long that is longer than a specific divisor of 2ⁿ-1 where n is an integer and n≥2;
a first output circuit configured to output, for each separated dividend, a remainder and a 2k-bit quotient that are obtained by dividing by the specific divisor a separated dividend with 0s added where the number of 0s is equal to integer multiple of k;
a second output circuit configured to output, for each separated dividend, a first bit sequence that includes an upper k-bit sequence of the 2k-bit quotient, and a second bit sequence that includes i sets of lower k bits of the 2k-bit quotient, wherein a position of each separated dividend counted from a separated dividend having the lowest bit is called i where i=0 to h/k-1;
a quotient addition circuit configured to add composite sequences in each of which the first bit sequence is placed at upper bits and the second bit sequence is placed at lower bits;
a remainder addition circuit configured to calculate sum of remainders output from the first output circuit;
a remainder division circuit configured to divide the sum of remainders by the specific divisor and output a quotient and a remainder; and
a carried value addition circuit configured to add an output from the quotient addition circuit and the quotient output from the remainder division circuit.

4. The division circuit according to claim 3,
wherein the first output circuit stores 2^{k} values of the 2k-bit quotient and the remainder corresponding to values of the separated dividends and output the 2k-bit quotient in response to the separated dividend.

5. A memory controller that controls access to memory modules that are separated into 2ⁿ-1 channels where n is an integer and n≥2, the memory controller comprising:
a separation circuit configured to separate a dividend into k-bit segments starting from a lowest bit of the dividend where k is integer multiple of n, and output h/k separated dividends, wherein the dividend is h-bit long that is longer than a specific divisor that is the number of channels;
a first output circuit configured to output, for each separated dividend, a remainder and a 2k-bit quotient that are obtained by dividing by the specific divisor a separated dividend with 0s added where the number of 0s is equal to integer multiple of k;
a second output circuit configured to output, for each separated dividend, a first bit sequence that includes an upper k-bit sequence of the 2k-bit quotient, and a second bit sequence that includes i sets of lower k bits of the 2k-bit quotient, wherein a position of each separated dividend counted from a separated dividend having the lowest bit is called i where i=0 to h/k-1;
a quotient addition circuit configured to add composite sequences in each of which the first bit sequence is placed at upper bits and the second bit sequence is placed at lower bits;
a remainder addition circuit configured to calculate sum of remainders output from the first output circuit;
a remainder division circuit configured to divide the sum of remainders by the specific divisor and output a quotient and a remainder;
a carried value addition circuit configured to add an output from the quotient addition circuit and the quotient output from the remainder division circuit; and
a selection circuit configured to select one channel from among the 2ⁿ-1 channels based on the remainder output from the remainder division circuit and select, based on the result output from the carried value addition circuit, one memory module from among the memory modules that belongs to the one channel.
